# FASCICULE DE BREVET EUROPEEN

(11) **EP 2 000 369 B1**
(45) Date de publication et mention de la délivrance du brevet: **13.01.2010**
(21) Numéro de dépôt: 08300207.1
(22) Date de dépôt: 19.05.2008
(51) Int. Cl.: B60R 21/02, B60R 21/06

(54) **Agencement de retenue de bagages pour véhicule automobile**
Gepäckrückhalteanordnung für ein Kraftfahrzeug
Baggage retaining arrangement for an automobile

(30) Priorité: 04.06.2007 FR 0703968
(43) Date de publication de la demande: 10.12.2008
(73) Titulaire: Renault S.A.S., 92100 Boulogne-Billancourt (FR)
(72) Inventeur: Grondin, Christophe, 78310, MAUREPAS (FR); Tartanac, Jean-Claude, 92160, ANTONY (FR)

(56) Documents cités:
- DE-U1- 20 215 934
- DE-U1-202006 007 474
- US-A- 5 702 143
- US-B1- 6 390 526

## Description

La présente invention concerne un agencement de retenue de bagages pour véhicule automobile, du type comportant un moyen de retenue muni de premiers moyens de fixation aptes à coopérer avec des seconds moyens de fixation portés par la structure du véhicule, dans lequel le moyen de retenue présente une armature supérieure dont au moins une extrémité est formée d'un crochet.

Un agencement de retenue de bagages selon le préambule de la revendication 1 est connu du document DE 20 2006 007 474 U1.

Ce type de moyen de retenue présentant des crochets pour la fixation sur caisse implique une prise en compte de l'architecture du véhicule sur le coté de caisse, pour que les seconds moyens de fixation portés par la caisse, et aptes à recevoir les premiers moyens de fixation, puissent répondre à une double contrainte contradictoire, à savoir d'une part se loger dans un environnement offrant peu d'espaces, et d'autre part permettre de supporter des efforts important pour une retenue de bagages conforme aux normes imposées au constructeurs.

Un des objectifs de l'invention est de proposer un agencement de retenue de bagages apte à encaisser les efforts dégagés par une décélération importante ou un choc, notamment subi à l'avant du véhicule, en proposant toutefois des moyens de fixation d'encombrement réduit.

En outre, en réponse à des objectifs que l'on retrouve invariablement chez les différents constructeurs automobiles, la présente invention se veut également peu coûteuse et peu encombrante.

Pour répondre à ces objectifs, l'invention propose un agencement de retenue de bagages pour véhicule automobile du type décrit précédemment,
caractérisé en ce que les seconds moyens de fixation sont formés par un fil soudé par résistance sur la structure du véhicule.

Selon différentes caractéristiques de la présente invention :
- le fil de fixation présente des extrémités rectilignes, aptes à être soudées par résistance sur une surface sensiblement plane de la structure latérale du véhicule, et une partie centrale courbée en forme de U.
- l'orientation des directions de soudure des extrémités rectilignes du fil de fixation sur la caisse est sensiblement parallèle à la direction de l'effort du crochet sur la partie centrale courbe du fil de fixation.
- les seconds moyens de fixation sont des crochets, chaque extrémité de l'armature supérieure étant munie d'un crochet qui est apte à coopérer avec un fil de fixation soudé par résistance sur la structure latérale du véhicule.

L'invention concerne également un véhicule automobile dans lequel au moins un agencement de retenue de bagages tel qu'évoqué est présent. Au moins deux fils de fixation peuvent être soudés sur une même structure latérale du véhicule. La structure latérale du véhicule peut comporter dans sa partie supérieure, un côté de caisse, un renfort de côté de caisse, chaque fil étant alors soudé par résistance sur le renfort de côté de caisse.

D'autres caractéristiques et avantages de l'invention apparaîtront à la lecture de la description détaillée qui suit pour la compréhension de laquelle on se reportera aux dessins annexés dans lesquels :
- la figure 1 est une représentation schématique d'un agencement de retenue de bagages selon l'invention, vue de l'arrière du véhicule ;
- la figure 2 est un agrandissement d'un crochet formé sur le moyen de retenue et du fil, tel que représenté à la figure 1 ;
- la figure 3 est une vue similaire à la figure 2, sans l'habillage de la structure du véhicule ;
- la figure 4 est une vue en coupe de la figure 3 ;

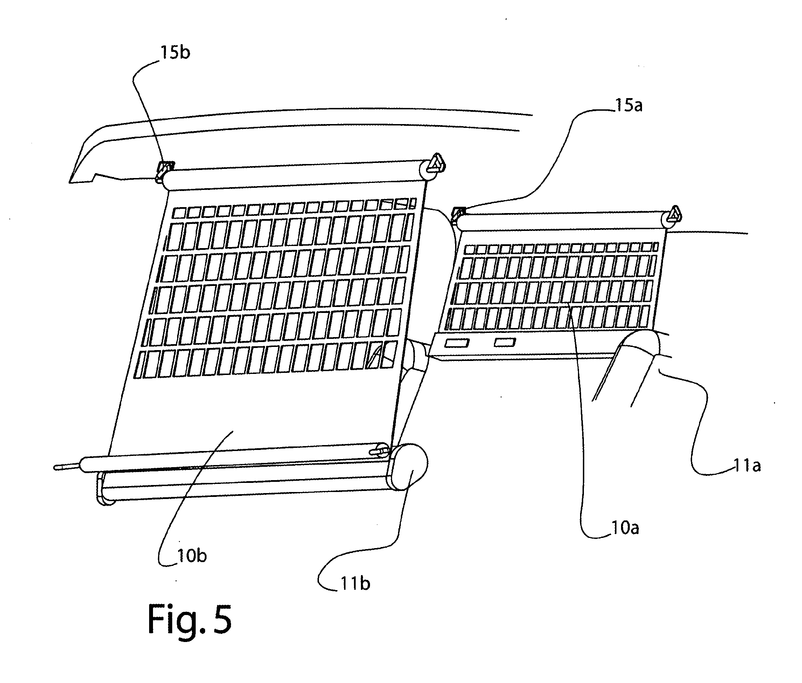

- la figure 5 est une représentation de deux positions distinctes d'un agencement de bagages selon l'invention.

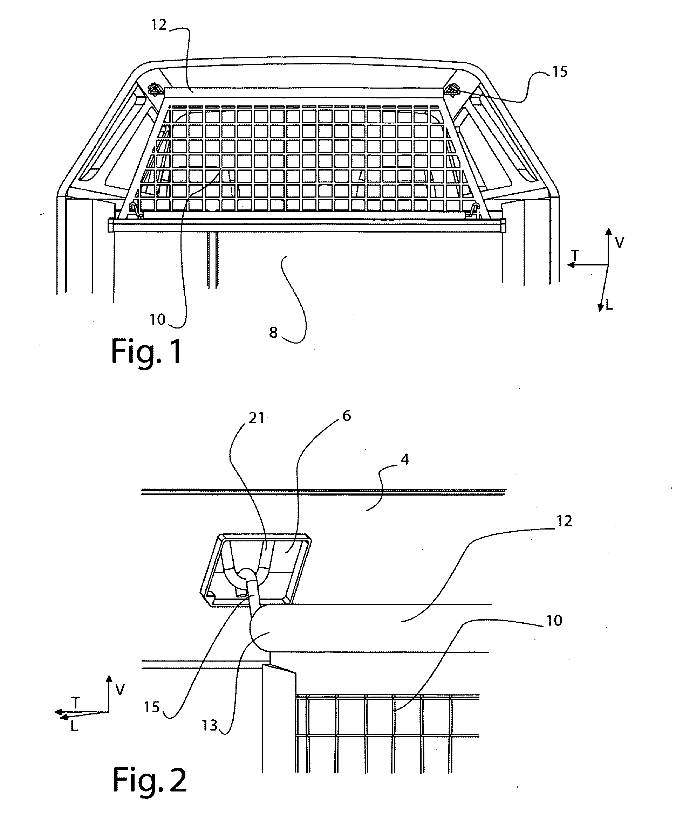

Dans la description qui va suivre, on adoptera à titre non limitatif une orientation longitudinale, verticale et transversale selon l'orientation traditionnellement utilisée dans l'automobile et indiquée par le trièdre L, V, T des figure 1, 2 et 4.

Tel que représenté, un agencement de retenue de bagages selon l'invention comprend un moyen de retenue 10 formé ici à titre d'exemple d'un filet, d'autres moyens de retenue pouvant prendre la forme d'une grille par exemple. Ce moyen de retenue 10 comprend notamment au moins une armature inférieure 11 sensiblement horizontale qui est solidaire du dossier d'une banquette arrière de sièges 8, et au moins une armature supérieure 12 sensiblement horizontale, qui s'étend transversalement au véhicule, de sorte que chacune des extrémités 13 de l'armature 12 est située en regard d'une structure latérale du véhicule. Cette armature inférieur 11 est fixe par rapport au siège, et le filet et l'armature supérieure 12 sont aptes à se dérouler et s'enrouler pour passer d'une position escamotée contre l'armature inférieure 11, à une position de retenue dans laquelle l'armature supérieure 12 s'étend à proximité du pavillon du véhicule de sorte que le filet est tendu.

Au moins une extrémité 13 de l'armature 12 porte des premiers moyens de fixation, sous la forme d'un crochet 15. Un crochet 15 selon l'invention est apte à coopérer avec des seconds moyens de fixation portés par la structure du véhicule. Ces seconds moyens de fixation sont formés par un fil de fixation 21 soudé par résistance sur la structure du véhicule. Une telle soudure par résistance d'un fil sur la structure du véhicule, pour recevoir un crochet 15 du moyen de retenue 10, permet de présenter selon l'invention une pièce de formes simples, et permet une soudure sans apport de matière supplémentaire et d'une finition constante sans éclat de soudure résiduel.

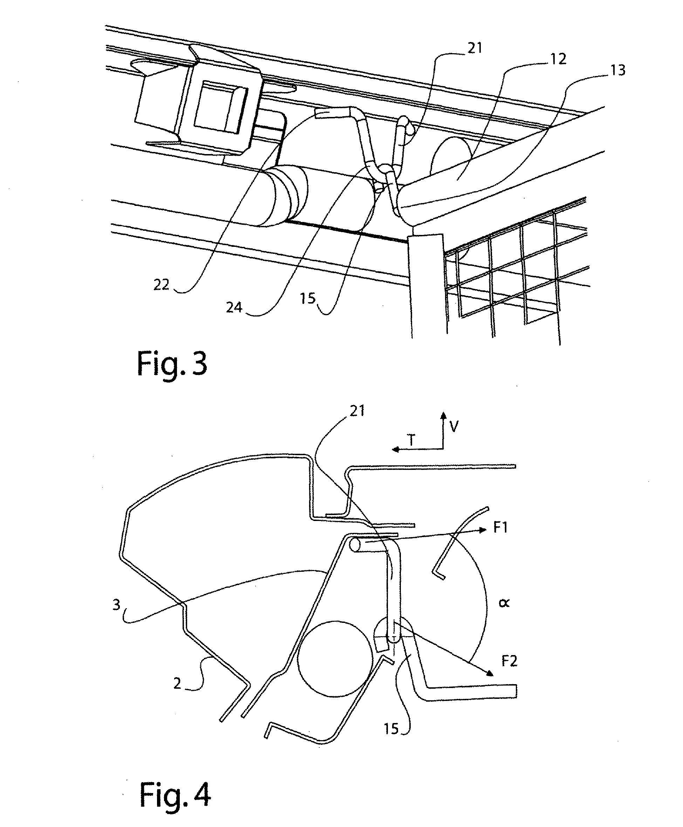

Un fil de fixation 21 selon l'invention, représentée à la figure 3 par exemple, présente des extrémités rectilignes 22 aptes à être soudées sur une surface plane de la structure latérale du véhicule et une partie centrale courbée en forme de U, cette partie centrale s'étendant verticalement dans un plan sensiblement perpendiculaire au plan dans lequel s'étendent les extrémités du fil de fixation 21. Les extrémités rectilignes 22 peuvent s'étendre dans ce plan selon une composante transversale et une composante longitudinale. Ainsi, selon un mode de réalisation représenté à la figure 3, les extrémités 22 du fil de fixation 21 s'écartent longitudinalement de part et d'autre de la partie centrale, une extrémité vers l'avant du véhicule, l'autre vers l'arrière du véhicule. Il sera compris que pour éviter l'arrachement sous efforts du fil de fixation 21, il est avantageux que l'extrémité du fil disposée la plus à l'arrière du véhicule soit orientée sensiblement parallèlement à la direction de l'effort encaissé par le moyen de retenue 10 sur le fil de fixation 21.

L'orientation et la forme du fil de fixation 21 sont telles que le fil de fixation 21 est apte à coopérer avec un crochet 15 disposé à une extrémité 13 de l'armature supérieure 12 du moyen de retenue 10 de bagages. Afin que le crochet 15 solidaire du moyen de retenue 10, disposé dans l'habitacle du véhicule, puisse coopérer avec le fil de fixation 21 solidaire de la structure de caisse, un orifice 6 est réalisé dans l'habillage 4 recouvrant le côté de caisse 2 vers l'intérieur du véhicule, un avantage de l'invention étant ici que le fil de fixation 21 est entièrement compris dans l'habillage 4.

Afin d'optimiser la tenue aux efforts du moyen de retenue 10, l'orientation des directions de soudure des extrémités 22 du fil de fixation 21 sur la structure latérale du véhicule est particulièrement définie par rapport à la direction de l'effort du crochet 15 sur la partie centrale courbe 24 du fil de fixation 21. Notamment, la direction F2 de cet effort doit être le plus proche possible de la direction de soudure F1. Il en résulte une disposition particulièrement avantageuse du fil de fixation 21 par rapport au crochet 15, dans laquelle les contraintes subis par le fil de fixation génèrent un couple le plu petit possible, afin d'éviter l'arrachement du fil de fixation. A titre d'exemple, pour que la direction F2 de l'effort soit parallèle à la direction de soudure F1, une pièce de renfort peut être disposée entre le fil de fixation 21 et le côté de caisse 2 ou le renfort de côté de caisse 3. Dans tous les cas, l'angle α entre les directions F1 et F2 doit être le plus petit possible pour présenter un agencement le plus résistant possible.

Des paramètres tels que la longueur de la soudure et le diamètre du fil par exemple, peuvent être modifiés pour encaisser l'effort souhaité.

Il sera compris qu'un même moyen de retenue 10 peut être disposé à plusieurs positions longitudinales du véhicule, selon que la banquette de sièges arrière 8 est positionnée dans une première position classique d'assise, ou dans une deuxième position rabattue. La première position d'assise de la banquette 8 implique une position haute 11a de l'armature inférieure 11, tandis que la deuxième position rabattue de la banquette 8 implique une position basse 11b de l'armature inférieure, située en avant par rapport à la position haute 11a.

A cet effet, afin de permettre la fixation de ce moyen de retenue 10 à plusieurs positions, le nombre de fils nécessaires est soudé par résistance sur la structure de caisse du véhicule. Chaque structure latérale du véhicule peut ainsi selon l'invention présenter plusieurs fils soudés à des distances déterminées l'un de l'autre.

Tel que représenté à titre d'exemple à la figure 4, la structure latérale du véhicule peut comporter dans sa partie supérieure, un côté de caisse 2, un renfort de côté de caisse 3, chaque fil de fixation 21 étant alors soudé par résistance sur le renfort de côté de caisse 3.

## Revendications

1. Agencement de retenue de bagages pour véhicule automobile, du type comportant un moyen de retenue (10) muni de premiers moyens de fixation aptes à coopérer avec des seconds moyens de fixation portés par la structure du véhicule, dans lequel le moyen de retenue (10) présente une armature supérieure (12) dont au moins une extrémité (13) est formée d'un crochet (15), **caractérisé en ce que** les seconds moyens de fixation sont formés par un fil de fixation (21) soudé par résistance sur la structure du véhicule.

2. Agencement selon la revendication 1, **caractérisé en ce que** le fil de fixation (21) présente des extrémités rectilignes (22), aptes à être soudées par résistance sur une surface sensiblement plane de la structure latérale du véhicule, et une partie centrale courbée en forme de U.

3. Agencement selon la revendication 2, **caractérisé en ce que** l'orientation des directions (F1) de soudure des extrémités rectilignes (22) du fil de fixation (21) sur la caisse est sensiblement parallèle à la direction (F2) de l'effort du crochet (15) sur la partie centrale courbe (24) du fil de fixation (21).

4. Agencement selon la revendication 1 à 3, **caractérisé en ce que** les premiers moyens de fixation sont des crochets (15), chaque extrémité (13) de l'armature supérieure (12) étant munie d'un crochet (15) qui est apte à coopérer avec un fil de fixation (21) soudé par résistance sur la structure latérale du véhicule.

5. Véhicule automobile dans lequel au moins un agencement selon l'une des revendications 1 à 4 est présent.

6. Véhicule selon la revendication précédente, **caractérisé en ce qu'**au moins deux fils de fixation (21) sont soudés sur une même structure latérale du véhicule.

7. Véhicule automobile selon l'une des revendication 5 ou 6, dans lequel la structure latérale du véhicule comporte dans sa partie supérieure, un côté de caisse (2), un renfort de côté de caisse (3), **caractérisé en ce que** chaque fil est soudé par résistance sur le renfort de côté de caisse (3).

## Claims

1. Luggage retaining arrangement for a motor vehicle, of the type comprising a retaining means (10) provided with first fixing means suitable for co-operating with second fixing means mounted on the vehicle structure, in which the retaining means (10) has a top reinforcement (12), at least one end (13) of which is formed by a hook (15), **characterized in that** the second fixing means are formed by a fixing wire (21) resistance-welded onto the vehicle structure.

2. Arrangement according to Claim 1, **characterized in that** the fixing wire (21) has straight ends (22), suitable for resistance-welding onto a substantially flat surface of the side structure of the vehicle, and a U-shaped curved central part.

3. Arrangement according to Claim 2, **characterized in that** the orientation of the directions (F1) of welding of the straight ends (22) of the fixing wire (21) on the body is substantially parallel to the direction (F2) of the effort exerted by the hook (15) on the curved central part (24) of the fixing wire (21).

4. Arrangement according to Claims 1 to 3, **characterized in that** the first fixing means are hooks (15), each end (13) of the top reinforcement (12) being provided a hook (15) which is suitable for co-operating with the fixing wire (21) resistance-welded onto the side structure of the vehicle.

5. Motor vehicle in which at least one arrangement according to one of Claims 1 to 4 is present.

6. Vehicle according to the preceding claim, **characterized in that** at least two fixing wires (12) are welded onto the same side structure of the vehicle.

7. Motor vehicle according to one of Claims 5 or 6, in which the side structure of the vehicle has in its top part a body side (2) and a body side reinforcement (3), **characterized in that** each wire is resistance-welded onto the body side reinforcement (3).

## Patentansprüche

1. Gepäckrückhalteanordnung für ein Kraftfahrzeug der Art, die ein Rückhaltemittel (10) umfasst, das mit ersten Befestigungsmitteln versehen ist, die dazu geeignet sind, mit zweiten, von der Fahrzeugstruktur getragenen Befestigungsmitteln zusammenzuwirken, wobei das Rückhaltemittel (10) einen oberen Rahmen (12) aufweist, bei dem mindestens ein Ende (13) aus einem Haken (15) gebildet ist, **dadurch gekennzeichnet, dass** die zweiten Befestigungsmittel durch einen Befestigungsdraht (21) gebildet sind, der durch Widerstandsschweißen an die Fahrzeugstruktur angeschweißt ist.

2. Anordnung nach Anspruch 1, **dadurch gekennzeichnet, dass** der Befestigungsdraht (21) geradlinige Enden (22), die dazu geeignet sind, mittels Widerstandsschweißen an eine im Wesentlichen ebene Fläche der Seitenstruktur des Fahrzeugs angeschweißt zu werden, und einen mittleren U-förmig gebogenen Teil aufweist.

3. Anordnung nach Anspruch 2, **dadurch gekennzeichnet, dass** die Ausrichtung der Schweißrichtungen (F1) der geradlinigen Enden (22) des Befestigungsdrahts (21) an der Karosserie im Wesentlichen parallel zur Richtung (F2) der Beanspruchung des mittleren gebogenen Teils (24) des Befestigungsdrahts (21) durch den Haken (15) verläuft.

4. Anordnung nach Ansprüchen 1 bis 3, **dadurch gekennzeichnet, dass** es sich bei den ersten Befestigungsmitteln um Haken (15) handelt, wobei jedes Ende (13) des oberen Rahmens (12) mit einem Haken (15) versehen ist, der dazu geeignet ist, mit einem Befestigungsdraht (21) zusammenzuwirken, der durch Widerstandsschweißen an die Seitenstruktur des Fahrzeugs angeschweißt ist.

5. Kraftfahrzeug, bei dem mindestens eine Anordnung nach einem der Ansprüche 1 bis 4 vorliegt.

6. Fahrzeug nach dem vorhergehenden Anspruch, **dadurch gekennzeichnet, dass** mindestens zwei Befestigungsdrähte (21) an derselben Seitenstruktur des Fahrzeugs angeschweißt sind.

7. Kraftfahrzeug nach Anspruch 5 oder 6, wobei die Seitenstruktur des Fahrzeugs an ihrem oberen Teil eine Karosserieseite (2) und eine Karosserieseitenverstärkung (3) umfasst, **dadurch gekennzeichnet, dass** jeder Draht durch Widerstandsschweißen an der Karosserieseitenverstärkung (3) angeschweißt ist.
